Europäisches Patentamt

European Patent Office

Office européen des brevets

(11) Publication number: **0 523 596 A1**

# EUROPEAN PATENT APPLICATION

(21) Application number: **92111916.0**

(22) Date of filing: **13.07.92**

(51) Int. Cl.⁵: **G11B 5/64**, G11B 5/704

(30) Priority: **18.07.91 JP 178487/91**

(43) Date of publication of application:
**20.01.93 Bulletin 93/03**

(84) Designated Contracting States:
**DE FR GB IT LU NL**

(71) Applicant: **DIAFOIL HOECHST CO., LTD.**
**3-2, Marunouchi 2-chome, Chiyoda-ku**
**Tokyo(JP)**

(72) Inventor: **Utsumi, Shigeo**
**1786-1, Shimotsuruma, Yamato-shi**
**Kanagawa-ken(JP)**
Inventor: **Inagaki, Masashi**
**919-6, Nagatake, Tsukui-cho, Tsukui-gun**
**Kanagawa-ken(JP)**
Inventor: **Watanuki, Yuko**
**Machida-Kouputaun 19-406 1-13-6 Ogawa**
**Machida-shi Tokyo(JP)**

(74) Representative: **TER MEER - MÜLLER -**
**STEINMEISTER & PARTNER**
**Mauerkircherstrasse 45**
**W-8000 München 80(DE)**

(54) **Polyester film for high-density magnetic tape.**

(57) Disclosed herein is a polyester film for high-density magnetic tapes, having a light transmittance of not more than 55% and comprising:

a layer composed of polyester (A) having a specific surface characteristic, and

a layer composed of polyester (B) laminated on at least one side of said layer of polyester (A), containing not less than 2.0 wt% of the particles, and having a thickness of not more than 2.5 $\mu$m and the specific surface characteristics.

The present invention relates to a polyester film for high-density magnetic tapes.

With the diffusion of videos, the high-grade type of video tape has come to be desired as compared with the standard type. The raising of image quality of the high grade-type video tapes has been attempted by the improvement of magnetic powder or the reduction of carbon black content in the magnetic-layer binder. These conventional techniques, however, had the problem that the shielding property of the tape could be deteriorated, and in case of using a magnetic recording tape in a video deck in which the tape end is detected by means of light transmittance, the deck would often fail to detect the tape end.

As a solution to these problems, there have been proposed (1) a method in which the shielding particles are added in the film (Japanese Patent Application Laid-Open (Kokai) No. 63-43931) and (2) a method in which a layer containing carbon black is laminated on the film (Japanese Patent Application Laid-Open (Kokai) Nos. 50-93103 and 56-83841). These methods, however, could not be satisfactory improving means as they brought with the problem of deteriorating the surface condition of the film or generating foreign substances in the film, so-called giving rise to "fish eyes".

An offer of a polyester film provided with a high shielding performance without being deteriorated in surface properties is strongly demanded.

As a result of strenuous studies for overcoming the said problems, it has been found that by laminating a layer composed of a polyester (B) containing 2.0 wt% or more of the particles and having a thickness of 2.5 $\mu$m or less, on at least one side of a layer composed of a polyester (A), the obtained polyester multilayered film has the excellent shielding property without being deteriorated in its surface properties and is useful as a base film for high-density magnetic tapes. The present invention has been achieved on the basis of this finding.

In an aspect of the present invention, there is provided a polyester film for high-density magnetic tapes, having a characteristic represented by the following formula (4) and comprising a layer composed of a polyester (A) having the surface properties represented by the following formula (1) and a layer composed of a polyester (B) laminated on at least one side of the said polyester (A) layer, containing not less than 2.0 wt% of the particles, having a thickness of not more than 2.5 $\mu$m and having the surface properties represented by the following formulae (2) and (3):

$$0.002 \leq Ra^A \leq 0.015 \qquad (1)$$

$$0.010 \leq Ra^B \leq 0.030 \qquad (2)$$

$$80 \leq Pc^B \qquad (3)$$

$$T_{900} \leq 55 \qquad (4)$$

(wherein $Ra^A$ represents a center line average roughness ($\mu$m) of the surface of the polyester (A) layer, $Ra^B$ represents a center line average roughness ($\mu$m) of the surface of the polyester (B) layer, $T_{900}$ represents a light transmittance (%) of the film at a wavelength of 900 nm, and $Pc^B$ represents a peak count (peaks/0.8 mm) in the surface of the polyester (B) layer).

The polyesters used for the polyester (A) layer and the polyester (B) layer in the present invention are the polymers obtained by polycondensing aromatic dicarboxylic acids such as terephthalic acid, naphthalene-2,6-dicarboxylic acid, etc., and aliphatic glycols such as ethylene glycol, diethylene glycol, tetramethylene glycol, neopentyl glycol, etc. Typical examples of such polymers are polyethylene terephthalate (PET) and polyethylene-2,6-naphthalene dicarboxylate (PEN). The polyesters used in the present invention are not only homopolymers but also polymers obtained by copolymerizing the aromatic or aliphatic dicarboxylic acids, diols or the like in an amount not affecting the crystallinity of the product, for example, not more than 10 mol%, preferably not more than 5 mol%.

It is also possible to blend other polymers such as polyamides, polyolefins, polycarbonates, etc., in an amount of not more than 10% by weight. It is, however, undesirable to blend those polymers which have the possibility of excessively reducing the crystallizability of the polymer or causing excessive surface roughness of the product.

In the polyester (A) layer of the film of the present invention may be added additive(s) such as particles, organic lubricant, stabilizer, colorant, antioxidant, defoaming agent, antistatic agent, etc., if necessary. The particles are usually used for imparting a slipperiness to the film. As the particles, there can be used in the present invention the known inactive external particles such as kaolin, clay, calcium carbonate, silicon oxide, spherical silica, calcium terephthalate, aluminum oxide, titanium oxide, calcium phosphate, lithium fluoride, carbon black, etc., and the internal particles formed in the polymer in the course of preparation of a

2

polyester with a high-melting point organic compound infusible at melt film-forming of the polyester resin, a crosslinked polymer such as monodispersed organic particles and a metallic compound catalyst (such as an alkali metal compound, an alkaline earth metal compound, etc.) used in the polyester synthesis.

In the film of the present invention, the center line average roughness $Ra^A$ of the surface of the polyester (A) layer is in the range of 0.002 to 0.015 $\mu$m. When the $Ra^A$ is less than 0.002 $\mu$m, the slipperiness of the produced film becomes poor even if the surface of the polyester (B) layer has high roughness. On the other hand, when the $Ra^A$ exceeds 0.015 $\mu$m, the electric properties for a video tape therefrom become inferior.

As the particles to be added to the polyester (A) layer, there are usually used the inactive particles having an average diameter of 0.007 to 5 $\mu$m, preferably 0.02 to 1.5 $\mu$m. The particle content is usually 0.001 to 0.70 wt%, preferably 0.1 to 0.50 wt%. However, in case of using carbon black as the particles, it is preferred that its content is not more than 1.5 wt%, more preferably not more than 1.0 wt%, even more preferably not more than 0.8 wt%.

In the polyester (A) layer, there may also be added recycled resin and in-line coating compound-containing resin which are a self-recycled resin without giving disadvantageous effect to the film surface roughness.

The thickness of the polyester (B) layer is 0.01 to 2.5 $\mu$m, preferably 0.5 to 2.0 $\mu$m. When its thickness is greater than 2.5 $\mu$m, the uniformity of the film surface condition become to be deteriorated.

The $Ra^B$ of the surface of the polyester (B) layer is in the range of 0.010 to 0.030 $\mu$m. When the $Ra^B$ is less than 0.010, the film slipperiness becomes poor, and when the $Ra^B$ is greater than 0.030, the electro-magnetic transfer characteristics become to be deteriorated.

The number of coarse protuberances $n_3$ of interference fringes of the 3rd or more order at a measuring wave length of 540 nm at the surface of the polyester (B) layer is not more than 10 peaks/10 cm$^2$, preferably 0.01 peaks/10 cm$^2$.

The $Pc^B$ of the surface of the polyester (B) layer should be at least 80 peaks per 0.8 mm. When the $Pc^B$ is less than 80 peaks/0.8 mm, the uniformity of the protuberances becomes poor, so that the electric properties of the magnetic tape made therefrom become to be deteriorated. The $Pc^B$ is preferably not less than 100 peaks/0.8 mm, more preferably not less than 110 peaks/0.8 mm.

Light transmittance of the multilayered polyester film of the present invention at a wavelength of 900 nm is not more than 55%, preferably not more than 35%.

For affording the desired shielding characteristics to the film, usually carbon black particles are added in the polyester (B). The kind of the carbon black used in the present invention is not specified, but it is preferable to use lamp black, thermal black, furnace black, acetylene black or the like. The primary particle size of the carbon black is also not specified, but it is preferably in the range of 10 to 100 nm, more preferably 10 to 30 nm. When the primary particle size exceeds 100 nm, the particles may form very large aggregates, encouraging formation of coarse protuberances in the film surface. Also, when the primary particle size is less than 10 nm, large aggregates of particles tend to be formed because of increased surface energy of the particle.

The content of the carbon black particles is usually not less than 2.0 wt%, preferably 2.0 to 20 wt%, more preferably 3.0 to 10 wt%. When the content is less than 2.0 wt%, the shielding property of the film tend to become unsatisfactory.

As method for adding the carbon black particles in the film, a method in which the particles are added during or after the polymerization reaction, or the particles are incorporated in the course of drying or extrusion operation. In a preferred method, there is once prepared a masterbatch containing carbon black in a high concentration and then other polyester(s) is(are) blended before or after drying to obtain a film containing carbon black in a desired concentration. In this case, the carbon black concentration in the masterbatch is preferably 1.5 to 50 wt%, more preferably 10 to 30 wt%. When the carbon black concentration in the masterbatch exceeds 50 wt%, it becomes difficult to prevent aggregation of the particles in the preparation of the masterbatch even when using the carbon black particles with good dispersibility. Also, when the carbon black concentration in the masterbatch is less than 1.5 wt%, the degree of freedom for blending of other starting materials and additives is lessened because of the enlarged compositional ratio of the masterbatch at the time of blending.

It is preferable that after filtrating the masterbatch in the masterbatch extrusion step, the thus-filtered masterbatch is again passed through a filter when forming the film. The filter used here is preferably ones of around 1,000 meshes or a smaller mesh size.

It is recommendable to add a dispersant for bettering dispersibility of the carbon black particles in the film. The kind of the dispersant used for the said purpose is not specified, but the higher fatty acids having not less than 16 carbon atoms and/or derivatives thereof, polyvinylpyrrolidone, and sodium salts of epoxylated polybutadiene or sulfonated naphthalene can be exemplified. The content of the dispersant is also not specified, but it is preferably not more than 10,000 ppm, more preferably not more than 5,000 ppm.

The carbon black particles can afford the specific properties such as adhesiveness and slipperiness to the film, but it is preferable to add the inactive inorganic particles beside the said carbon black particles for affording even better adhesiveness and slipperiness to the polyester (B) layer.

As the inactive particles to be added to the polyester (B) layer, there can be used the inactive external particles of a salt or an oxide composed of an element selected from the group consisting of Group I, Group II, Group III or Group IV elements of the Periodic Table or other elements, such as kaolin, clay, calcium carbonate, silicon oxide, spherical silica, calcium terephthalate, aluminum oxide, titanium oxide, calcium phosphate, etc., and the internal particles formed in the polymer in the course of preparation of a polyester with organic particles (especially, monodisperse) such as a high-melting point organic compound infusible at melt film-forming of the polyester resin and a crosslinked polymer, and a metallic compound catalyst (such as an alkaline metal compound or an alkaline earth metal compound) used in the polyester synthesis.

The average particle diameter of the inactive inorganic particles added to the polyester (B) layer is not specifically defined, but it is usually in the range of 0.05 to 5 $\mu$m, preferably 0.1 to 3 $\mu$m. Among the said inactive inorganic materials, titanium oxide is especially preferred since it has excellent dispersibility with the carbon black particles and enables obtainment of a uniform film surface and a corresponding reduction of the amount of carbon black to be added. The average size of the titanium oxide particles is preferably 0.05 to 3 $\mu$m, more preferably 0.1 to 1 $\mu$m in diameter.

Addition of an organic lubricant is also recommendable for further improving the slipperiness of the film. The kind of the organic lubricant used in the present invention is not specified, but aliphatics, fatty acid esters, and alkylenebis-aliphatic and aromatic amides are preferred. The aliphatics used here are preferably those having a large number of carbon atoms, such as montanic acid. Typical examples of the said fatty acid esters are montanic ethylene glycol esters. Hexamethylenebisbeheneamide, hexamethylenebisstearylamide and N,N'-distearylterephthalamide can be exemplified as examples of said alkylenebis-aliphatic and/or aromatic amides. The content of the organic lubricant in the film is not specifically defined in the present invention, but it is usually not more than 10,000 ppm, preferably not more than 5,000 ppm. A too high content of the lubricant may adversely affect adhesiveness of the film at the time of deposition or coating to the film.

The multilayered film of the present invention may be a two-layer film in which a polyester (B) layer is laminated on one side of a polyester (A) layer. The film of the present invention may be also of a structure having three or more layers. For example, there may be provided two or more polyester (A) layers, with part of them being constituted by a recycled resin layer.

A process for producing a film according to the present invention is described in detail below. It is to be understood, however, that the following method is merely an embodiment of the invention and in no way restrictive to the scope of the invention.

In the present invention, the known techniques such as co-extrusion method, extrusion laminating method, dry laminating method, etc., can be employed for obtaining a multilayered film, but the co-extrusion method is advantageous for forming a thin polymer layer and also preferred from the aspect of productivity, too, so that a film-forming method using the co-extrusion method is described here as a preferred embodiment of the present invention.

Polyester (A) and polyester (B) containing as desired appropriate amounts of inorganic particles and other additives are dried respectively by a suitable drying means such as hopper dryer, puddle dryer, vacuum dryer, etc., then melted at a temperature of 200 to 320°C by using the separate extruders, then joined in a passageway or slot die, extruded in two or three layers and rapidly cooled to obtain a non-stretched film.

The conventional methods such as T-die method, tubular method, etc., can be employed for extrusion. It is possible to properly change the thickness ratio of the multilayered film by adjusting the discharge rates of the respective extruders in the extruding operation. In case of using the T-die method when obtaining a non-stretched film, a so-called electrostatic pinning method at the time of rapid cooling is carried out, thereby obtaining the films with uniform thickness profile, The non-stretched film thus obtained is then stretched not less than 2.0 times in both machine and transverse directions at a temperature in the range from $(Tg^A - 10)°C$ to $(Tc^A - 10)°C$ [wherein $Tg^A$ represents a glass transition temperature (°C) of polyester (A), and $Tc^A$ represents a crystallization temperature (°C) of polyester (A)], and the thus obtained biaxially oriented polyester film is heat-set at a temperature of 180 to 240°C.

The heat-treatment is usually conducted in a tension-fixing state, but the film may be subjected to relaxation or width-adjustment with extension of not more than 20% in the machine and/or transverse

4

direction of the film in the course of the heat-treatment or at the cooling after the heat-treatment.

A corona discharge-treatment may be applied on one or both sides of the film during the said stretching operation, or before or after stretching to improve an adhesiveness to the printed layer of the film.

Also, by applying a conventional coating-treatment on one or both sides of the film during the said stretching operation, or before or after stretching, it is possible to improve an adhesiveness, an antistatic property, a slipperiness, a shielding property, etc., of the film.

The thus obtained film is wound up as a commercial product.

The thickness of the multilayered polyester film of the present invention, which is used as a base film for magnetic tapes is usually in the range of 3 to 30 $\mu$m, preferably 5 to 25 $\mu$m.

A known magnetic layer is formed on the smooth surface of the film of the present invention by means of a coating method, a vapor deposition method or a sputtering method.

The film according to the present invention has excellent light-shielding property and surface properties, and is useful as a base film for high-density magnetic tapes, and thus its industrial value is high.

## Examples

The present invention will hereinafter be described more particularly with reference to the examples thereof. It is to be understood, however, that these examples are merely intended to be illustrative and not to be construed as limiting the scope of the invention.

The film evaluation methods used herein are as described below.

### (1) Light transmittance ($T_{900}$)

Measured by using a spectrophotometer UV-3100S (mfd. by Shimadzu Corp.), at a wavelength of 900 nm.

### (2) Average surface roughness (Ra)

Determined in the following way by using a surface roughness tester SE-3FX (mfd. by Kosaka Kenkyusho Inc.). The radius at the tip of the stylus was 2 $\mu$m and the load applied thereto was 30 mg. A film portion with the reference length L (2.5 mm) was cut out in the direction of the center line from the sectional curve of the film. In the coordinates with the center line of the cut-out portion on the X-axis and the direction of longitudinal magnification on the Y-axis, when the roughness curve was expressed as y = f-(x), the value given from the following formula was used as a measure of surface roughness (unit: $\mu$m). Cutoff value was 80 $\mu$m. Measurement was made at 5 points in the longitudinal direction and at 5 points in the transverse direction, and the average of total 10 measurements was represented as Ra.

$$ Ra = \frac{1}{L} \int_0^L \left| f(x) \right| dx $$

### (3) Peak count

Measured by using a surface roughness tester SE-3F (mfd. by Kosaka Kenkyusho, Inc.) under the following conditions: cutoff = 0.08 mm; needle pressure = 30 mg; stylus radius = 2 $\mu$m; measuring length = 0.8 mm; height magnification = X50,000; width magnification = X100. Portions where the center line of the sectional curve (level 0) is crossed rightward-ascendingly with the roughness curve and then is crossed leftward-descendingly with the roughness curve, were assumed as one peak, and the number of such peaks per measuring length of 0.8 mm was counted.

### (4) Film thickness ratio

A thin film of a section of the sample film was made by a microtome, and the thin film was observed by a transmission electron microscope (TEM) at X20,000 magnification.

### Example 1

Preparation of polyester chips

100 parts by weight of dimethyl terephthalate, 70 parts by weight of ethylene glycol and 0.07 parts by weight of calcium acetate monohydrate were heated in a reactor to conduct an ester-exchange reaction while evaporating away methanol. The temperature was raised to 230°C over a period of about 4.5 hours after beginning the reaction, whereupon the ester-exchange reaction was substantially completed.

Then 0.04 parts by weight of phosphoric acid and 0.035 parts by weight of antimony trioxide were added and the resultant mixture was polymerized by a conventional method. The reaction temperature was gradually raised till finally reaching 280°C while the pressure was gradually reduced till finally reaching 0.5 mmHg. The reaction was completed after four hours, and the reaction product was formed into chips in a known way to obtain a polyester having an intrinsic viscosity ($\eta$) of 0.65. This polyester is designated polyester ($A_1$).

Said polyester ($A_1$) and the carbon black particles having primary particle size of 15 nm were kneaded by a twin-screw kneader and the kneaded mixture was passed through a 1,000-mesh filter and formed into the chips to obtain a masterbatch having a carbon black concentration of 10 wt% and an intrinsic viscosity ($\eta$) = 0.60. This masterbatch is designated polyester ($B_2$).

87 parts by weight of terephthalic acid and 42 parts by weight of ethylene glycol were reacted in the presence of 100 parts by weight of bis-($\beta$-hydroxyethyl) terephthalate oligomer at a temperature of 260°C under normal pressure to conduct esterification. After the 4-hour reaction, there was obtained a polyester oligomer having an esterification rate of 97%. Then an ethylene glycol slurry of the fine spherical silica particles having an average diameter of 0.3 $\mu$m were added to the said oligomer in an amount of 0.35 wt% based on the polyester. To the resultant mixture, 0.014 parts by weight of ethyl acid phosphate, 0.022 parts by weight of antimony trioxide and 0.086 parts by weight of magnesium acetate were further added to conduct a polycondensation reaction. After polycondensing for 3 hours and 50 minutes, a polyester designated as polyester ($C_1$) and having an intrinsic viscosity ($\eta$) of 0.660 was obtained.

The above preparation process for polyester ($C_1$) was repeated except that the $\delta$-type alumina particles were used in place of the spherical silica particles in an amount of 1.00 wt% to obtain polyester ($D_1$).

Production of film

A blend of polyester ($A_1$), polyester ($B_1$) and polyester ($D_1$) with a carbon black content of 3.6 wt% and an alumina content of 0.36 wt% was used as starting material (1), while using polyester ($C_1$) alone as starting material (2) and polyester (A) alone as starting material (3). Said material (1), material (2) and material (3) were dried, melted at a temperature of 287°C by the separate extruders, joined in a passageway, extruded and quickly cooled to obtain a non-stretched film having a material (2)/material (3)-/material (1) three-layer structure. This non-stretched film was stretched first 2.4 times at a temperature of 83°C and then 1.2 times at a temperature of 95°C in the machine direction and then further stretched 3.7 times at a temperature of 125°C in the transverse direction, followed by heat-setting at a temperature of 220°C to obtain a multilayered film having 15 $\mu$m in thickness. The layer thickness of the obtained film was as follows: layer of material (1) = 0.5 $\mu$m, layer of material (2) = 13 $\mu$m and layer of material (3) = 1.5 $\mu$m.

Example 2

A multilayered film having 15 $\mu$m in thickness was obtained by following the procedure of Example 1 except that the carbon black content in the material (1) was changed to 5.6 wt%.

Comparative Example 1

A multilayered film having 15 $\mu$m in thickness was obtained in the same way as Example 1 except that the carbon black content in the material (1) was changed to 0.42 wt%, and that no layer of material (3) was provided, with the thickness of the material (1) layer being made 13 $\mu$m and the thickness of the material (2) layer 2 $\mu$m.

Comparative Example 2

A multilayered film having 15 $\mu$m in thickness was obtained in the same way as Example 1 except that the carbon black content in the material (1) was changed to 7.5 wt%, and that no layer of material (3) was provided, with the thickness of the material (1) layer being made 2 $\mu$m and the thickness of the material (2) layer 13 $\mu$m.

Comparative Example 3

A multilayered film having 15 $\mu$m in thickness was obtained in the same way as Example 1 except that the carbon black content in the material (1) was changed to 3.2 wt%, and that no layer of material (3) was provided, with the thickness of the material (1) layer being made 5 $\mu$m and the thickness of the material (2) layer 10 $\mu$m.

The properties of the obtained films are shown in Table 1 below.

A magnetic tape was produced by using each of the said films as a base film and coating it with a magnetic layer according to a conventional method. There were obtained the very excellent magnetic tapes from the films of Examples 1 and 2, but the magnetic tape obtained by using the film of Comparative Example 1 was unstable in running and the tape obtained by using the film of Comparative Example 2 was poor in electric properties. Drop-out was notable with the magnetic tape obtained by using the film of Comparative Example 3. Thus, any of the magnetic tapes obtained by using the films of Comparative Examples 1-3 could not stand practical use.

Table 1

|  | $T_{900}$ (%) | $Ra^A$ | $Ra^B$ | $Pc^B$ |
|---|---|---|---|---|
| Example 1 | 46 | 0.009 | 0.018 | 112 |
| Example 2 | 26 | 0.009 | 0.024 | 118 |
| Comp. Example 1 | 52 | 0.012 | 0.008 | 40 |
| Comp. Example 2 | 13 | 0.010 | 0.035 | 78 |
| Comp. Example 3 | 15 | 0.011 | 0.029 | 72 |

**Claims**

1. A polyester film for high-density magnetic tapes, having a characteristic represented by the following formula (4) and comprising:

   a layer composed of polyester (A) having a surface characteristic represented by the following formula (1), and

   a layer composed of polyester (B) laminated on at least one side of said layer of polyester (A), containing not less than 2.0 wt% of the particles, and having a thickness of not more than 2.5 $\mu$m and the surface characteristics represented by the following formulae (2) and (3):

   $$0.002 \leq Ra^A \leq 0.015 \quad (1)$$

   $$0.010 \leq Ra^B \leq 0.030 \quad (2)$$

   $$80 \leq Pc^B \quad (3)$$

   $$T_{900} \leq 55 \quad (4)$$

   (wherein $Ra^A$ represents a center line average roughness ($\mu$m) of the surface of the polyester (A) layer, $Ra^B$ represents a center line average roughness ($\mu$m) of the surface of the polyester (B) layer, $T_{900}$ represents a light transmittance of the film at a wavelength of 900 nm, and $Pc^B$ represents a peak count (peaks/0.8 mm) in the surface of the polyester (B) layer).

2. A polyester film according to Claim 1, wherein polyester (A) contains 0.001 to 0.7 wt% of the inactive particles having an average diameter of 0.007 to 5 $\mu$m.

3. A polyester film according to Claim 1, wherein the number of the coarse protuberances of 3rd and more orders in the surface of the polyester (B) layer is not more than 10 protuberances/10 cm$^2$.

4. A polyester film according to Claim 1, wherein polyester (B) contains carbon black having a primary particle size of 10 to 30 nm.

5. A polyester film according to Claim 4, wherein the content of carbon black in polyester (B) is 2.0 to 20 wt%.

6. A polyester film according to Claim 1, wherein polyester (B) contains carbon black having a primary particle diameter of 10 to 30 nm and the inactive particles having an average diameter of 0.05 to 5 $\mu$m.

7. A polyester film according to Claim 4 or 6, wherein an organic lubricant is further added in polyester (B).

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | EP-A-0 238 985 (HOECHST AKTIENGESELLSCHAFT) 30 September 1987 * page 3, line 20 - line 24 * * page 3, line 25 - line 31 * * page 3, line 32 - line 35 * * page 3, line 35 - line 38 * * claims 1-9 * | 1,2,4-7 | G11B5/64 G11B5/704 |
| A,D | PATENT ABSTRACTS OF JAPAN vol. 5, no. 150 (P-081)22 September 1981 & JP-A-56 083 841 ( TORAY IND INC ) 8 July 1981 * abstract * | 1 | |
| A,D | PATENT ABSTRACTS OF JAPAN vol. 12, no. 258 (C-513)20 July 1988 & JP-A-63 043 931 ( DIAFOIL CO ) 25 February 1988 * abstract * | 1 | |
| | | | TECHNICAL FIELDS SEARCHED (Int. Cl.5) |
| | | | G11B |

The present search report has been drawn up for all claims

| Place of search | Date of completion of the search | Examiner |
|---|---|---|
| THE HAGUE | 27 OCTOBER 1992 | KLOCKE S. |